# EUROPEAN PATENT APPLICATION

(11) **EP 1 479 924 A1**
(43) Date of publication of application: **24.11.2004**
(21) Application number: 04011708.7
(22) Date of filing: 18.05.2004
(51) Int. Cl.: F16B 19/10, F16B 19/00, F16B 5/12

(54) **Blind rivet fastener and workpiece assembly using same**

(30) Priority: 19.05.2003 JP 2003140549
(71) Applicant: Newfrey LLC, Newark, Delaware 19711 (US)
(72) Inventor: Hayashi, Masahiro c/o Pop Rivet Fastener K.K., Aichi-ken (JP); Takao, Kazuhiro c/o Pop Rivet Fastener K.K., Aichi-ken (JP); Akema, Tuyoshi c/o Pop Rivet Fastener K.K., Aischi-ken (JP); Fukazawa, Kazuhiro, Toyota-shi, Aichi-ken 471-8571 (JP)
(74) Representative: Haar, Lucas H., Dipl.-Ing.

(57) **Abstract**

A blind rivet fastener is provided having a portion which is to extend from a workpiece on the side of a radially expanded portion thereof after a blind rivet setting operation, capable of allowing an additional component to be attached thereto.

The blind rivet fastener (1) comprises: a rivet (5) including a hollow tubular sleeve (2) having a first open end and a second closed end opposite to the first end, and a flange (3) integrally formed with the sleeve (2) at the first end and having a diameter greater than that of the sleeve; and a mandrel (7) received in the cavity of the sleeve while protruding from the flange. The mandrel is integrally formed with a large-diameter head (9) positioned in the sleeve (2) to engage with the sleeve at a position adjacent to the second end (13). The second end (13) of the sleeve (2) has a non-radially-expanding portion (14) of a predetermined length in which the mandrel does not exist and the non-radially-expanding portion (14) has an outer peripheral surface formed with a circumferential groove (15) for engaging a component.

## Description

This invention relates to blind rivet fasteners that are used to join workpieces, such as panels, or to attach a component to one or more workpieces. Blind rivet fasteners are advantageous in that they can be used without access to a rear side of a workpiece. Conventionally, a blind rivet fastener comprises a rivet including a sleeve with an integral flange at a first end, and a mandrel received in the sleeve with a portion protruding from the flange. The rivet is inserted through a hole in a workpiece so that the flange abuts one side of the workpiece. When the protruding portion of the mandrel is pulled away from the flange by a setting tool, a head of the mandrel adjacent to a second end of the sleeve forms a radially expanded portion of the sleeve to clamp the workpiece and another workpiece or component between the flange and the radially expanded portion. The mandrel has a weakened portion that breaks after setting of the fastener so that only a portion of the mandrel within the sleeve remains.

### The following publications disclose examples of prior blind rivet fasteners:

Japanese Patent Laid-Open No. 49-116449 (Publication 1) discloses a blind rivet fastener comprising: a rivet including a sleeve having a first open end and a second open end opposite to the first end, and a flange integrally formed with the sleeve at the first end and having a diameter greater than that of the sleeve; and a mandrel received in the sleeve while protruding from the flange. The mandrel is integrally formed with a large-diameter head exposed from the second end of the sleeve to engage with an end face of the second end. When a portion of the mandrel protruding from the flange is pulled away from the flange using a setting tool, the head acts on the second end of the sleeve to form a radially expanded portion in the sleeve to clamp a plurality of workpieces between the flange and the radially expanded portion to connect the workpieces.

Japanese Design Registration No. 351012 (Publication 2) discloses a blind rivet fastener comprising: a rivet including a sleeve having an open first end and a closed second end opposite to the first end, and a flange integrally formed with the sleeve at the first end and having a diameter greater than that of the sleeve; and a mandrel received in the sleeve while protruding from the flange. The mandrel is integrally formed with a large-diameter head positioned in the sleeve to engage with the sleeve at a position adjacent to the second end. When a portion of the mandrel protruding from the flange is pulled away from the flange using a setting tool, the head acts on the second end of the sleeve to form a radially expanded portion in the sleeve so as to clamp a plurality of workpieces between the flange and the radially expanded portion to connect the workpieces. U.S. Patent No. 3,438, 301 (Japanese Patent Publication No. 46-15569: Publication 3) also discloses a blind rivet fastener having the same structure as above-mentioned.

In a blind rivet fastener disclosed in Japanese Utility Model Laid-Open No. 4-87014 (Publication 4), during a setting operation, a washer is inserted between a flange and a workpiece and fastened with them to form a predetermined gap between the flange and the workpiece. Then, the edge of a cap of synthetic resin is engaged with the gap to cover the flange with the cap. In a blind rivet fastener disclosed in Japanese Utility Model Laid-Open No. 62-115512 (Publication 5), during a setting operation, the edge of a hemispherical cap is clamped between a radially expanded portion and a workpiece, at the end or second flange of a sleeve opposite to a first flange, to cover a portion of the sleeve on the side of the second end and the head of a mandrel with the cap.

The blind rivet fasteners disclosed in Publications 1 to 3 show various basic structures for connecting a plurality of workpieces together. None of Publications 1 to 3 includes any suggestion of using a portion which is to extend from the second end of the sleeve opposite to the flange after a setting operation or a portion which is to extend from the workpiece on the side of the radially expanded portion after the blind rivet setting operation, to allow an additional component to be attached thereto.

While Publication 4 (Japanese Utility Model Laid-Open Publication No. 4-87014) discloses covering a portion on the side of the flange with a cap, it does not include any suggestion of using a portion of the sleeve or the head of the mandrel extending from the workpiece on the side of the radially expanded portion, to allow an additional component to be attached thereto. Publication 5 (Japanese Utility Model Laid-Open Publication No. 62-115512) discloses clamping fastening a cap between the radially expanded portion and the workpiece during the setting operation, but does not include any suggestion of using a portion of the sleeve or the head of the mandrel extending from the workpiece on the side of the radially expanded portion after the setting operation, to allow an additional component to be attached thereto.

It is an object of the present invention to provide a blind rivet fastener having a portion which is to extend from a workpiece on the side of a radially expanded portion thereof after a blind rivet setting operation, capable of allowing an additional component to be attached thereto, eliminating the need for any additional attachment for fastening a component to a workpiece, and eliminating space needed for such a component fastener.

A further object of the invention is to provide a workpiece assembly that uses a blind rivet fastener constructed in accordance with the invention.

In accordance with the present invention, a blind rivet fastener comprises a rivet including a sleeve, and a mandrel, the rivet being set by a setting tool that pulls an exposed portion of the mandrel away from a flange of the sleeve to thereby form a radially expanded sleeve portion, and an exposed portion of the sleeve or an exposed head of the mandrel beyond the radially expanded portion is provided with at least one of a groove, a protrusion, and a ridge for engagement with a component, such as a cap, for mounting the component on the fastener.

According to a first aspect of the present invention, there is provided a blind rivet fastener comprising: a rivet including a hollow tubular sleeve having a first open end and a second closed end opposite to the first end, and a flange integrally formed with the sleeve at the first end, the flange having a diameter greater than that of the sleeve; and a mandrel received in the cavity of the sleeve while protruding from the flange, the mandrel being integrally formed with a large-diameter head positioned in the sleeve to engage with the sleeve at a position adjacent to the second end, wherein a portion of the mandrel protruding from the flange is highly pulled up from the flange so that the head acts on the second end of the sleeve to form a radially expanded portion in the sleeve to clamp a plurality ofworkpieces between the flange and the radially expanded portion to connect the workpieces together. In this blind rivet, the second end of the sleeve has a non-radially-expanding portion of a certain length in which the mandrel does not exist, and the outer peripheral surface of the non-radially-expanding portion is formed with at least either one of a circumferential groove, a protrusion and a ridge for engaging a component.

According to another aspect of the present invention, there is provided a blind rivet fastener comprising: a rivet including a hollow tubular sleeve having a first open end and a second open end opposite to the first end, and a flange integrally formed with the sleeve at the first end, the flange having a diameter greater than that of the sleeve; and a mandrel received in the cavity of the sleeve while protruding from the flange, the mandrel being integrally formed with a large-diameter head exposed from the second end of the sleeve to engage with the end face of the second end, wherein a portion of the mandrel protruding from the flange is highly pulled up from the flange so that the head acts on the second end of the sleeve to form a radially expanded portion in the sleeve to clamp a plurality of workpieces between the flange and the radially expanded portion to connect the workpieces together. In this blind rivet, the head of the mandrel is formed to have an extended portion of a predetermined length in a direction away from the second end of the sleeve, and the outer peripheral surface of the extended head portion is formed with at least either one of a circumferential groove, a protrusion and a ridge for engaging a component.

According to a still other aspect of the present invention, there is provided a blind rivet fastener comprising: a rivet including a hollow tubular sleeve having a first open end and a second open end opposite to the first end, and a flange integrally formed with the sleeve at the first end, the flange having a diameter greater than that of the sleeve; and a mandrel received in the cavity of the sleeve while protruding from the flange, the mandrel being integrally formed with a large-diameter head engaging with the end face of the second end, wherein a portion of the mandrel protruding from the flange is highly pulled up from the flange so that the head acts on the second end of the sleeve to form a radially expanded portion in the sleeve to clamp a plurality of workpieces between the flange and the radially expanded portion to connect the workpieces together. In this blind rivet, a portion of the sleeve is formed with at least either one of component engaging groove, protrusion and ridge on the outer peripheral surface of the sleeve adjacent to the second end and spaced apart from the radially expanded portion.

The component-engaging circumferential groove, protrusion or ridge of each of the above blind rivets is formed in either the sleeve portion or the mandrel head each extending from the workpiece adjacent to the radially expanded portion after the blind rivet setting operation. Thus, the need for any additional attachment for fastening a component to the workpiece can be eliminated, and the space for the component fastener can be eliminated.

The above blind rivet may include a cap having an engagement portion fitted in the component-engaging circumferential groove. This cap can cover the radially expanded portion to provide enhanced appearance.

The invention will be further described in conjunction with the accompanying drawings, illustrating preferred (best mode) embodiments, and wherein:
FIG. 1 is a half-sectional front view of a blind rivet fastener according to a first embodiment of the present invention;
FIG 2 is a half-sectional front view of the blind rivet fastener in FIG 1, which is formed with a circumferential groove;
FIG 2A is a half-sectional truncated front view of a modification of the blind rivet fastener of Fig. 2, which is formed with a circumferential protuberance or ridge;
FIG 3 is a sectional view showing the blind rivet fastener in FIG 2, which has a plastic cap, as a component, attached thereto after it is set to a workpiece;
FIG 4 is a half-sectional front view of a blind rivet fastener according to a second embodiment of the present invention;
FIG 4A is a half-sectional truncated front view of a modification of the blind rivet fastener of FIG 4;
FIG. 5 is a sectional view showing the state after the blind rivet fastener in FIG 4 is set to a workpiece;
FIG 6 is a sectional view showing the state after a plastic cap, as a component, is attached to the blind rivet fastener in FIG 5;
FIG 7 is a half-sectional front view of a blind rivet fastener according to a third embodiment of the present invention;
FIG 7A is a half-sectional truncated front view of a modification of the blind rivet fastener of FIG 7;
FIG 8 is a sectional view showing the state after the blind rivet fastener in FIG. 7 is set to a workpiece; and
FIG 9 is a sectional view showing the state after a plastic cap, as a component, is attached to the blind rivet fastener in FIG. 8.

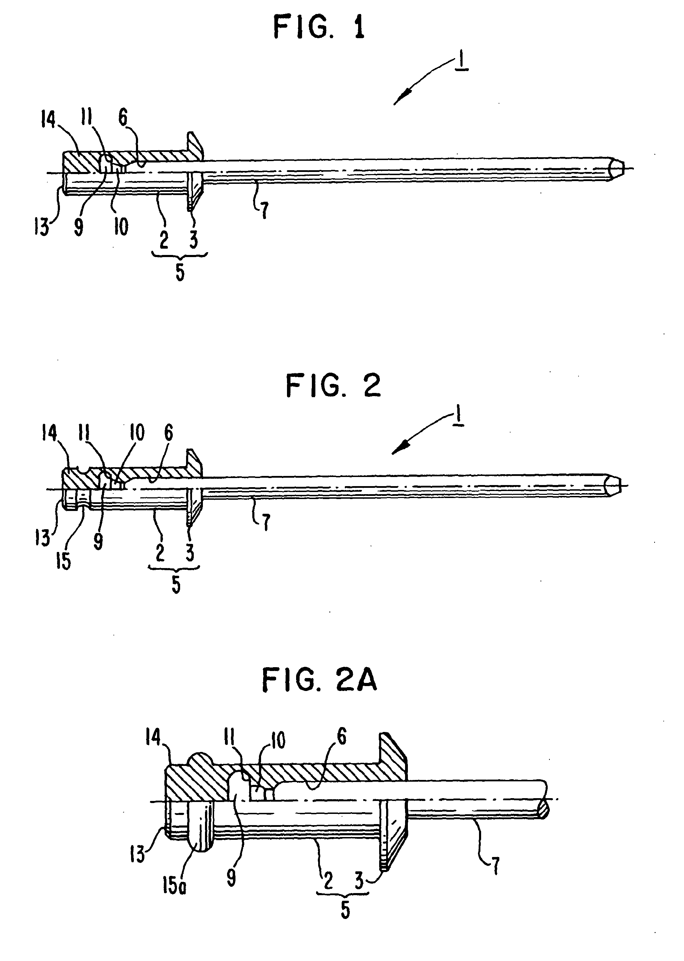

FIGS. 1 to 3 show a blind rivet fastener 1 according to a first embodiment of the present invention. FIG 1 shows the blind rivet fastener 1 before a circumferential groove for engaging a component is formed therein, and FIG. 2 shows the blind rivet fastener 1 formed with the component-engaging circumferential groove. The blind rivet fastener 1 comprises a rivet 5 including a sleeve 2 which has a cavity 6 formed therein, an open first end (right end in FIGS. 1 and 2) and a closed second end 13 (left end in FIGS. 1 and 2) opposite to the first end, and a flange 3 integrally formed with the sleeve 2 at the first end and having a diameter greater than that of the sleeve. The blind rivet fastener 1 also includes a mandrel 7 received in the cavity 6 of the sleeve 2 while protruding from the flange 2. The rivet 5 including the sleeve 2 and the flange 3, and the mandrel 7 are conventionally made of metal. Typically, in order to facilitate the deformation in a portion of the sleeve 2 of the rivet 5 in response to an operation of pulling on the mandrel 7, the rivet 5 is made of soft metal, such as aluminum, and the mandrel 7 is made of hard metal, such as steel.

The mandrel 7 is integrally formed with a large-diameter head 9 positioned in the sleeve 2 to engage with the sleeve at a position adjacent to the second end. The mandrel 7 is also formed with a small-diameter frangible portion 10 to be broken within the sleeve 2 when the mandrel 7 is pulled by a strong force. In the illustrated mandrel 7, the frangible portion 10 is formed adjacent to the large-diameter head 9. The frangible portion 10 may be formed at a different position from the illustrated position. The diameter of the frangible portion is determined in connection with the formation of the radially expanded portion or a fastening force. The shape of the cavity 6 of the sleeve 2 is designed to provide a shoulder 11 for engaging with the large-diameter head 9. As shown in FIGS. 1 and 2, the cavity 6 is preferably formed in a shape having an inner diameter in conformity to the respective diameters of the large-diameter head 9 and the frangible portion 10.

As shown in FIG 1, the sleeve 2 has a non-radially-expanding portion 14 of a predetermined length located on the side of the second end 13, at which the mandrel 7 is absent. As shown in FIG 2, the non-radially-expanding portion 14 has a groove 15 (preferably circumferential) for engaging a component, which is formed on the outer peripheral surface thereof. The length of the non-radially-expanding portion 14 is sufficient to allow at least the circumferential groove 15 to be reliably formed, and is selected in conformity to an engagement portion of a component to be attached thereto. In place of the groove 15, a protrusion or ridge 15a capable of engaging with and holding the component may be formed, as shown in Fig. 2A.

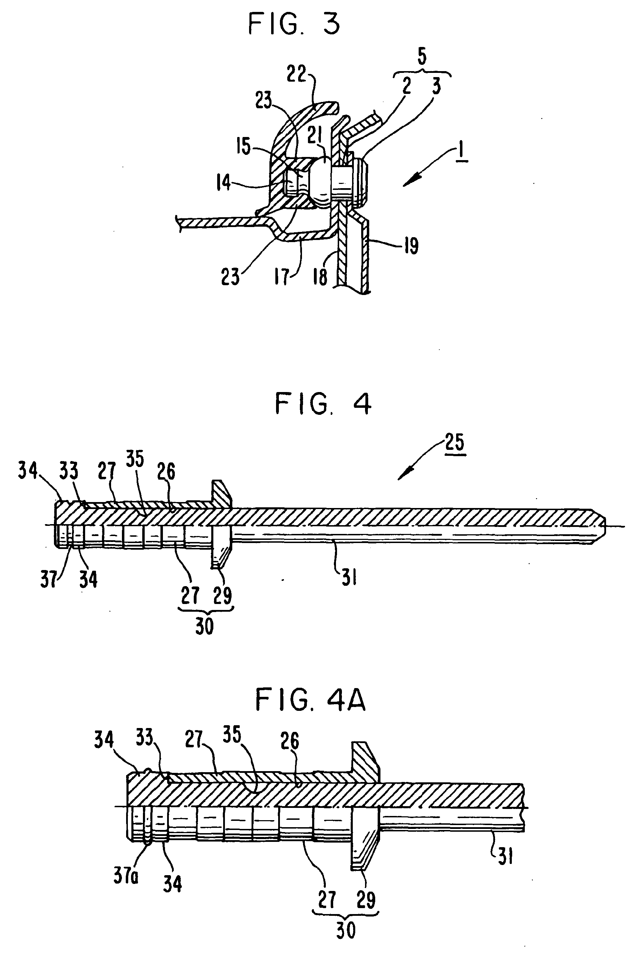

FIG. 3 shows an assembly in which a plurality of workpieces 17 to 19 are connected together by using the above blind rivet fastener 1. Upon connecting of a first workpiece 17, a second workpiece 18 and a third workpiece 19 together, the sleeve 2 of the blind rivet fastener 1 in FIG 2 is first inserted into aligned mounting holes of the workpieces 17 to 19 with the second end 13 of the sleeve 2 leading, until the flange 3 abuts the third workpiece 19. Then, a portion of the mandrel 7 protruding from the flange 3 is clamped by jaws at the front end of a conventional setting tool (not shown), and strongly pulled away from the flange to break the frangible portion 10, and to permit the protruding portion of the mandrel to be removed . During this setting operation, the large-diameter head 9 of the mandrel 7 acts on the second end 13 to deform a portion of the sleeve 2 so that the sleeve portion is expanded radially outward and is brought into contact with the first workpiece 17. The first workpiece 17, the second workpiece 18 and the third workpiece 19 are clamped between the radially expanded portion 21 and the flange 3, so that the workpieces 17 to 19 are firmly connected together.

Although the blind rivet fastener 1 is firmly fastened to the workpieces 17 to 19 through the radially expanded portion 21 and the flange 3, the non-radially-expanding portion 14 adjacent to the second end 13 of the sleeve 2 extends from the first workpiece 17 with a predetermined length. The component-engaging groove 15 is formed in the non-radially-expanding portion 14. Thus, any of various components can be attached by using this groove 15. A component illustrated in FIG. 3 is a plastic cap 22 formed with an engagement portion 23. The plastic cap 22 is attached to the sleeve 2 of the blind rivet 1 by fitting the engagement portion 23 into the groove 15. The cap 22 can cover a portion of the sleeve 2 including the radially expanded portion 21 to provide enhanced appearance in design. The cap 22 may be made of any suitable material. The component to be attached is not limited to a cap; any suitable component may be selected. The groove 15 formed in the non-radially-expanding portion 14 can eliminate not only the need for additionally attaching a component-mounting fitting to the workpiece but also the space for the component-mounting fitting. If a protrusion or ridge 15a is formed in the non-radially-expanding portion 14 as a substitute for the groove 15 as shown in Fig 2A, it can engage with a recess in the cap or another component.

FIGS. 4 to 6 show a blind rivet fastener 25 according to a second embodiment of the present invention. The blind rivet fastener 25 comprises a rivet 30 including a sleeve 27 which has a cavity 26 formed therein, a first open end (right end in FIG 4) and a second open end (left end in FIG. 4) opposite to the first end, and a flange 29 integrally formed with the sleeve 27 at the first end and having a diameter greater than that of the sleeve. The blind rivet fastener 25 also includes a mandrel 31 received in the cavity 26 of the sleeve 27 while protruding from the flange 29. As with the blind rivet fastener 1, the rivet 30 and the mandrel 31 are conventionally made of soft metal and hard metal, respectively.

The mandrel 31 is integrally formed with a large-diameter head 34 which is exposed from the second end of the sleeve 27 to engage with the end face 33 of the second end. The mandrel 31 is also formed with a small-diameter frangible portion 35 to be broken within the sleeve 27 when the mandrel 31 is pulled by a strong force. The outer surface of the sleeve 27 may have a portion with a different outer diameter than shown in FIG 4 to promote formation of the radially expanded portion of the sleeve at a desired position with a larger diameter.

The large-diameter head 34 of the mandrel 31 exposed from the second end of the sleeve 27 is formed so as to extend beyond the second end 33 of the sleeve 27 by a predetermined length. The extended large-diameter head 34 has an outer peripheral surface formed with a preferably circumferential groove 37 for engaging a component. The length of the large-diameter head 34 is set to allow the groove 37 to be reliably formed, and is selected in conformity to an engagement portion of a component to be attached thereto. As a substitute for the groove 37, a protrusion or ridge 37a capable of engaging with a recess in the component may be formed, as shown in Fig. 4A.

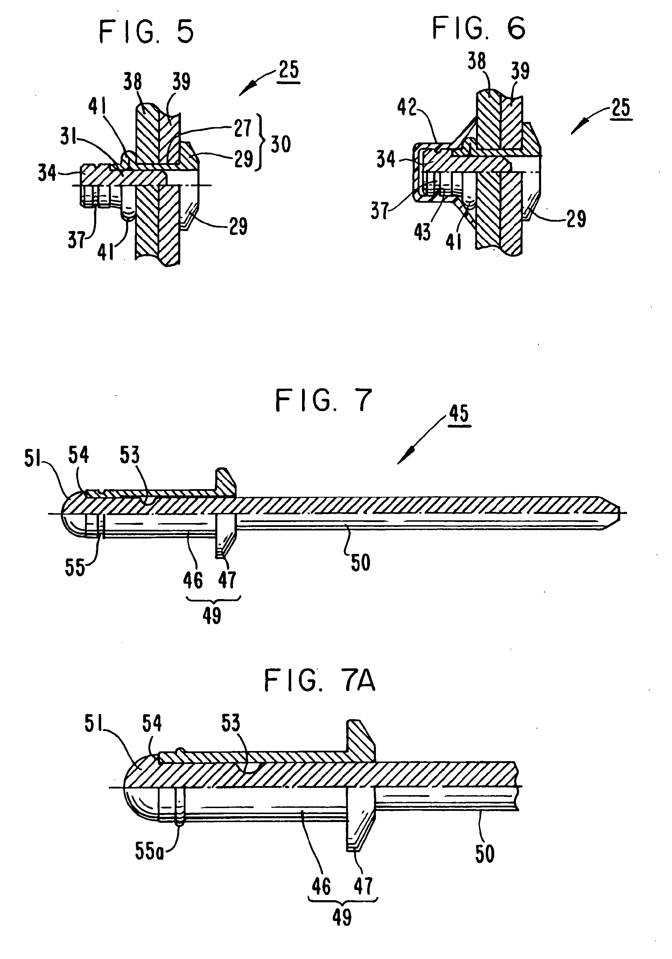

FIG 5 shows an assembly in which a plurality of workpieces 38, 39 are connected using the blind rivet fastener 25. The sleeve 27 ofthe blind rivet fastener 25 in FIG. 4 is inserted into aligned mounting holes of the workpieces 38, 39 until the flange 29 abuts the workpiece 39. Then, a portion of the mandrel 31 protruding from the flange 29 is clamped by the jaws at the front end of a setting tool, and strongly pulled to break the frangible portion 35 and break off the protruding portion of the mandrel. This strong pulling force causes the large-diameter head 34 of the mandrel 31 to act on the second end of the sleeve 27 so as to deform a portion of the sleeve to radially outwardly expand that portion of the sleeve. Thus, a radially expanded portion 41 is formed that is brought into contact with the first workpiece 38. The first workpiece 38 and the second workpiece 39 are clamped between the radially expanded portion 41 and the flange 29, so that the workpieces 38, 39 are firmly connected together. The blind rivet fastener 25 is firmly fastened to the workpieces 38, 39 through the radially expanded portion 41 and the flange 29, and the large-diameter head 34 of the mandrel 34 extends to a predetermined length from the first workpiece 38. The component-engaging groove 37, protrusion or ridge 37a is formed in the large-diameter head 34. Thus, various components can be attached by using this groove 37 or the protrusion or ridge 37a.

FIG 6 shows the state after a plastic cap 42 is attached to the component-engaging groove 37 of the large-diameter head 34. The cap 42 is formed with an engagement portion 43, and is attached to the large-diameter head 34 of the mandrel 31 of the blind rivet fastener 25 by fitting the engagement portion 43 into the groove 37. The cap 42 can cover a portion of the sleeve 27 including the large-diameter head 34 and the radially expanded portion 41 to provide enhanced appearance in design. The component to be attached is not limited to a cap, but any suitable component may be attached.

FIGS. 7 to 9 show a blind rivet fastener 45 according to a third embodiment of the present invention. The blind rivet fastener 45 comprises a rivet 49 including a sleeve 46 which has a cavity formed therein, a first open end (right end in FIG. 7) and a second open end (left end in FIG 7) opposite to the first end, and a flange 47 integrally formed with the sleeve 46 at the first end and having a diameter greater than that of the sleeve. The blind rivet fastener 45 also includes a mandrel 46 received in the cavity of the sleeve 46 while protruding from the flange 47. As with the blind rivet fastener 1, the rivet 49 and the mandrel 50 are conventionally made of soft metal and hard metal, respectively. The mandrel 50 is integrally formed with a large-diameter head 51 exposed from the second end of the sleeve 46 to engage with the end face of the second end 54. The mandrel 50 is also formed with a small-diameter frangible portion 53 to be broken within the sleeve 46 when the mandrel 50 is pulled by a strong force.

A portion of the sleeve 46 located adjacent to the second end 54 and at a distance from a portion to be formed as the radially expanded portion (e.g., a portion adjacent to the frangible portion 53) has an outer peripheral surface formed with a preferably circumferential groove 55 for engaging a component. In lieu of the groove 55, a protrusion or ridge 55a capable of engaging with and retaining the component may be formed, as shown in Fig. 7A.

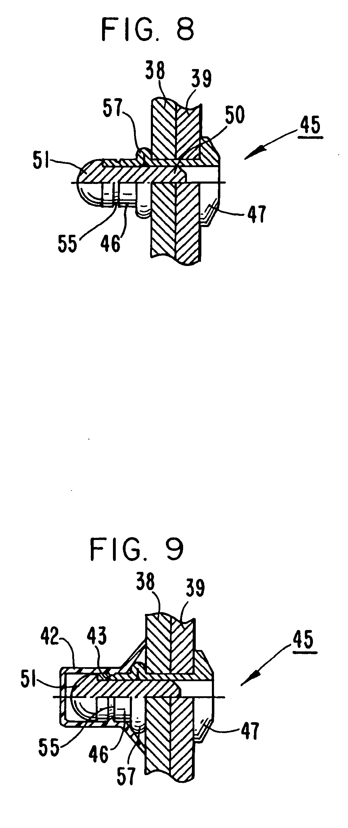

FIG 8 shows an assembly of a plurality of workpieces 38, 39 connected together using the blind rivet fastener 45. The sleeve 46 is inserted into aligned mounting holes of the workpieces 38, 39 until the flange 47 abuts the workpiece 39. Then, a portion of the mandrel 50 protruding from the flange 47 is clamped by a setting tool, and strongly pulled to break the frangible portion 53 and separate the protruding portion of the mandrel. This strong pulling force causes the large-diameter head 51 of the mandrel 50 to deform a portion of the sleeve 46 (e.g., a portion adjacent to the frangible portion 53) so that the portion of the sleeve 46 is expanded radially outward. Thus, a radially expanded portion 57 is formed and brought into contact with the first workpiece 38. The first workpiece 38 and the second workpiece 39 are clamped between the radially expanded portion 57 and the flange 47, so that the workpieces 38, 39 are firmly connected together. The blind rivet fastener 45 is firmly fastened to the workpieces 38, 39 through the radially expanded portion 57 and the flange 47, and the large-diameter head 51 and a non-radially-expanding portion of the sleeve 46 on the second end protrude from the first workpiece 38. The component-engaging groove 55 is formed in the non-radially-expanding portion of the sleeve 46 on the side of the second end. Thus, various components can be attached by using this groove 55 or the protrusion or ridge 55a.

FIG 9 shows the state after a plastic cap 42 is attached to the component-engaging groove 55 of the non-radially-expanding portion of the sleeve 46. The cap 42 is formed with an engagement portion 43, and attached to the sleeve 46 of the blind rivet 45 by fitting the engagement portion 43 into the groove 55. The cap 42 can cover a portion of the sleeve 46 including the large-diameter head 51 and the radially expanded portion 57 to provide enhanced appearance in design. The component to be attached is not limited to a cap, but any suitable component may be attached. If a protrusion or ridge 55a is formed in the sleeve portion 46 as a substitute for the groove 55, as shown in FIG. 7A, it can engage with and hold the cap or another component.

While preferred embodiments of the invention have been shown and described, it will be apparent that changes can be made without departing from the principles and spirit of the invention, the scope of which is defined in the appended claims. For example, for attaching a component to a rivet fastener of the invention, multiple grooves and/or multiple protrusions or ridges may be used.

## Claims

1. A blind rivet fastener comprising:
a rivet (5) including a sleeve (2) having an open first end and a closed second end (13) opposite to said first end, and a flange (3) integral with said sleeve at said first end; and
a mandrel (7) received in said sleeve with a portion protruding from said flange, and having a head (9) positioned in the sleeve to engage with said sleeve at a position adjacent to said second end (13),
wherein, in use, said portion of the mandrel protruding from said flange is pulled away from said flange so that said head acts on said second end of the sleeve to form a radially expanded portion (21) of said sleeve to clamp one or more workpieces between said flange and said radially expanded portion, and
wherein said second end (13) of said sleeve (2) has a non-radially-expanding portion (14) of a predetermined length at which said mandrel is absent, and an outer peripheral surface of said non-radially-expanding portion has at least one of a groove (15), a protrusion (15a), and a ridge for engaging a component.

2. A blind rivet fastener comprising:
a rivet (30) including a sleeve (27) having a first open end and a second open end opposite to said first end, and a flange (29) integral with said sleeve at said first end; and
a mandrel (31) received in said sleeve (27) with a portion protruding from said flange, and having a head (34) which is exposed from said second end of the sleeve to engage with an end face (33) of said second end,
wherein, in use, said portion of the mandrel (31) protruding from said flange is pulled away from said flange so that said head (34) acts on the said second end (33) to form a radially expanded portion (41) of said sleeve (27) to clamp one or more workpieces between said flange (29) and said radially expanded portion (41), and
wherein said head (34) of said mandrel (31) has a portion of a predetermined length beyond said second end of said sleeve, and an outer peripheral surface of said head portion has at least one of a groove (37), a protrusion, and a ridge (37a) for engaging a component.

3. A blind rivet fastener comprising:
a rivet (49) including a sleeve (46) having a first open end and a second open end opposite to said first end, and a flange (47) integral with said sleeve at said first end; and
a mandrel (50) received in said sleeve with a portion protruding from said flange, and having a head (51) engaging with an end face of said second end (54),
wherein, in use, said portion of the mandrel (50) protruding from said flange (47) is pulled away from said flange so that said head (51) acts on said second end (54) to form a radially expanded portion (57) of said sleeve to clamp one or more workpieces between said flange (47) and said radially expanded portion (57), and
wherein a non-radially-expanding portion of said sleeve (46) between said head (51) and said radially expanded portion (57) has an outer peripheral surface with at least one of a groove (55), a protrusion, and a ridge (55a) for engaging a component.

4. An assembly in which a blind rivet fastener as defined in anyone of the preceding Claims clamps one or more workpieces (18, 19, 38, 39) between the flange (3, 29, 47) and the radially expanded portion (21, 41, 57) of the sleeve (2, 27, 47).

5. The assembly as defined in Claim 4, wherein a component engages at least one of said groove (15, 37, 55), protrusion, and ridge (15a, 37a, 55a).

6. The assembly as defined in Claim 5, wherein the component is a cap (22, 42) having an engagement portion (23, 43) fitted to the at least one of said groove (15), protrusion, and ridge.
